# EUROPÄISCHE PATENTANMELDUNG

(11) **EP 4 235 153 A1**
(43) Veröffentlichungstag der Anmeldung: **30.08.2023**
(21) Anmeldenummer: 22158283.6
(22) Anmeldetag: 23.02.2022
(51) Int. Cl.: G01N 21/55, G06T 15/00, G06T 17/00, G01N 21/47

(54) **COMPUTERIMPLEMENTIERTES VERFAHREN, COMPUTERPROGRAMM, DATENVERARBEITUNGSSYSTEM UND VORRICHTUNG ZUR BESTIMMUNG DES REFLEKTANZVERHALTENS EINER OBERFLÄCHE EINES OBJEKTES UND NICHTFLÜCHTIGES COMPUTERLESBARES SPEICHERMEDIUM MIT DARAUF GESPEICHERTEN INSTRUKTIONEN ZUR BESTIMMUNG DES REFLEKTANZVERHALTENS EINER OBERFLÄCHE EINES OBJEKTES**

(71) Anmelder: Carl Zeiss Vision International GmbH, 73430 Aalen (DE)
(72) Erfinder: Nöll, Tobias, 67657 Kaiserslautern (DE); Fuchs, Jochen, 89231 Neu-Ulm (DE)
(74) Vertreter: Carl Zeiss AG - Patentabteilung

(57) **Zusammenfassung**

Es wird ein Computerimplementiertes Verfahren zur Bestimmung des Reflektanzverhaltens einer Oberfläche eines Objektes bereitgestellt, bei dem folgende Schritte ausgeführt werden: Bereitstellen von Bildern des Objektes (8),
Festlegen einer Mehrzahl von Bereichen (15, 16, 17) der Oberfläche des Objektes und
Bestimmen des Reflektanzverhaltens für jeden festgelegten Bereich der Oberfläche des Objektes basierend auf den bereitgestellten Bildern.

## Beschreibung

Die vorliegende Erfindung betrifft ein computerimplementiertes Verfahren, ein Computerprogramm, ein Datenverarbeitungssystem und eine Vorrichtung zur Bestimmung des Reflektanzverhaltens einer Oberfläche eines Objektes und ein nichtflüchtiges computerlesbares Speichermedium mit darauf gespeicherten Instruktionen zur Bestimmung des Reflektanzverhaltens einer Oberfläche eines Objektes.

Wenn man ein 3D-Objekt (nachfolgend auch Objekt genannt) digitalisieren möchte und somit quasi einen realistischen digitalen Zwilling (3D-Modell) erzeugen möchte, muss man neben der Geometrie und Farbe des 3D-Objektes auch das Reflektanzverhalten der Oberfläche des 3D-Objektes, das nachfolgend auch als zu digitalisierendes Objekt bezeichnet wird, erfassen. Unter dem Reflektanzverhalten wird hier insbesondere verstanden, wie das Licht von der Oberfläche des zu digitalisierenden Objektes reflektiert und/oder gestreut wird.

Die Vermessung des Reflektanzverhaltens stellt dabei eine große Herausforderung dar. Bisher werden dazu entweder viele genau kalibrierte und bekannte Punktlichtquellen (Schwarz, Christopher, et al. "Design and implementation of practical biderectional texture function measurement devices focusing on the developments at the University of Bonn" Sensors 14.5, 2014, Seiten 7753-7819; Schwarz, Christopher, et al. "DOME II: A Parallelized BTF Acquisition System" Material Appearance Modeling, 2013) oder eine Flächenlichtquelle von größerem Ausmaß (Xiaohe Ma, et al. "Free-form scanning of non-planar appearance with neural trace photography", 2021; Borom Tunwattanapong, et al. "Acquiring reflectance and shape from continuous spherical harmonic illumination", 2013) verwendet.

Ein Vorteil von Punktlichtquellen liegt darin, dass sie gut bekannt sind und genau kalibriert werden können. Damit sind ihre Positionen und Abstrahlrichtungen genau bekannt. Nachteilig ist, dass - besonders bei stark spiegelnden Oberflächen - eine einzelne Punktlichtquelle nur ein kleines Highlight auf der Objektoberfläche erzeugt. Es müssen somit relativ viele Aufnahmen durchgeführt werden und es müssen Annahmen getroffen werden, um Reflektanzeigenschaften der nicht direkt gemessenen Abschnitte der Objektoberfläche zu erhalten. Dies ist einerseits zeitaufwendig und führt andererseits dazu, dass die Reflektanzeigenschaften der nicht direkt gemessenen Abschnitte der Objektoberfläche unzutreffend sein können.

Ein Vorteil einer Flächenlichtquelle ist, dass sie ein großes Highlight auf der Objektoberfläche erzeugt und man damit deutlich mehr relevante Messdaten erzeugt. Nachteilig ist jedoch, dass man die Flächenlichtquelle nur schlecht kalibrieren und/oder kontrollieren kann und dadurch nicht genau weiß, aus welcher Richtung das Licht bei der Beleuchtung des einzelnen Abschnitts der Objektoberfläche kommt. Dies führt dazu, dass die Messdaten sehr schwierig zu interpretieren sind, was zu einer schlechten Messgenauigkeit führt.

Bei einem aus der US 2016/0275720 A1 bekannten Verfahren wird ein rein bildbasierter Ansatz verfolgt, bei dem die Textur des 3D-Objektes dynamisch je nach Betrachtungswinkel aus den aufgenommenen Bildern zusammengesetzt wird. Da dabei jedoch nicht die eigentliche Oberflächencharakteristik bestimmt wird, kann das 3D-Objekt nur in exakt derselben Beleuchtungssituation wie beim Scannen betrachtet werden. Auch ist diese Form der Texturierung nicht standardisiert, was eine Betrachtung der 3D Assets in anderen Programmen, z.B. 3D-Betrachtungsapplikationen, erschwert.

Aufgabe der Erfindung ist es daher ausgehend von dem aus der US 2016/0275720 A1 bekannten Verfahren, ein computerimplementiertes Verfahren zur Bestimmung des Reflektanzverhaltens einer Oberfläche eines Objektes zur Verfügung zu stellen, so dass eine Darstellung der Oberfläche des Objektes bei verschiedenen Beleuchtungssituationen möglich ist. Ferner soll ein Computerprogramm, ein Datenverarbeitungssystem und eine Vorrichtung zur Bestimmung des Reflektanzverhaltens einer Oberfläche eines Objektes und ein nichtflüchtiges computerlesbares Speichermedium mit darauf gespeicherten Instruktionen zur Bestimmung des Reflektanzverhaltens einer Oberfläche eines Objektes bereitgestellt werden.

Die Erfindung ist in den unabhängigen Ansprüchen definiert. Vorteilhafte Ausgestaltungen sind in den abhängigen Ansprüchen angegeben.

Das computerimplementierte Verfahren zur Bestimmung des Reflektanzverhaltens einer Oberfläche eines Objektes ist gekennzeichnet durch Bereitstellen von Bildern des Objektes (insbesondere durch ein Aufnehmen des Objektes), Festlegen einer Mehrzahl von Bereichen der Oberfläche des Objektes und Bestimmen des Reflektanzverhaltens für jeden festgelegten Bereich der Oberfläche des Objektes basierend auf den bereitgestellten Bildern.

Das erfindungsgemäße Verfahren kann somit in vorteilhafter Art das Reflektanzverhalten pro festgelegtem Bereich, bei dem es sich z.B. um einen Oberflächenpunkt handeln kann, bestimmen. Dies ermöglicht z.B., das Objekt in einer beliebigen Beleuchtungssituation wiederzugeben. Ferner ist diese Form der Darstellung standardisiert, d.h. beliebige Tools können zwecks Nach- und Weiterverarbeitung verwendet werden. Ferner kann insbesondere für das Reflektanzverhalten Farbe, Albedo, Rauigkeit, Metallizität, etc. bestimmt werden.

Unter Reflektanz wird hier insbesondere der Reflexionsgrad und daher das Verhältnis der reflektierten Strahlungsleistung zur einfallenden Strahlungsleistung verstanden. Unter Reflektanzverhalten wird hier insbesondere verstanden, wie das Licht von der Oberfläche des Objektes reflektiert und/oder gestreut wird. In anderen Worten, das Reflektanzverhalten beschreibt den optischen Eindruck, den eine Person bei Betrachten der Oberfläche aufgrund von reflektierenden, streuenden und/oder absorbierenden Eigenschaften der Oberfläche gewinnt.

Bei dem Objekt kann es sich um eine Brille, eine Brillenfassung oder um ein Brillenglas handeln.

Ferner kann zur Bereitstellung der Bilder mindestens eine der folgenden Beleuchtungen verwendet werden: Punktlichtquelle, Flächenlichtquelle oder eine Kombination aus Punktlichtquelle und Flächenlichtquelle.

Es können I) zum Bereitstellen der Bilder
- ein oder mehrere erste Bereiche der Oberfläche des Objektes mit Licht einer ersten Punktlichtquelle beleuchtet und aufgenommen werden, sowie
   ein oder mehrere zweite Bereiche der Oberfläche des Objektes mit Licht einer Flächenlichtquelle beleuchtet und aufgenommen werden,
   es können II) zum Bestimmen des Reflektanzverhaltens
- erste Reflektanzdaten aus der bzw. den Aufnahmen des bzw. der ersten Bereiche ermittelt werden, zweite Reflektanzdaten aus der bzw. den Aufnahmen des bzw. der zweiten Bereiche ermittelt werden und
   ein Reflektanzverhalten des bzw. der zweiten Bereiche basierend auf den ersten und zweiten Reflektanzdaten bestimmt werden, wobei die ersten Reflektanzdaten über den bzw. die zweiten Bereiche unter Berücksichtigung der zweiten Reflektanzdaten extrapoliert werden.

Unter Reflextanzdaten werden hier insbesondere solche Daten verstanden, die die Reflektanz und/oder das Reflextanzverhalten beschreiben, wie z.B. Winkel des einfallenden Lichtes, Winkel des ausfallenden bzw. reflektierten Lichtes, reflektierte Helligkeit jeweils bezogen auf einen Punkt der Oberfläche.

Jeder beleuchtete erste Bereich kann kleiner als jeder beleuchtete zweite Bereich sein und/oder mindestens ein beleuchteter erster Bereich kann mindestens teilweise innerhalb mindestens eines beleuchteten zweiten Bereiches liegen.

Bei der Bestimmung des Reflektanzverhalten des bzw. der zweiten Bereiche kann eine Segmentierung des bzw. der zweiten Bereiche in Abschnitte gleichen Reflektanzverhaltens durchgeführt werden.

Beim Ermitteln der zweiten Reflektanzdaten und/oder bei der Bestimmung des Reflektanzverhalten des bzw. der zweiten Bereiche kann mindestens ein Teilbereich des zu digitalisierenden Objektes, der in der bzw. den Aufnahmen des bzw. der zweiten Bereiche nicht sichtbar und/oder nicht beleuchtet ist, maskiert werden und damit beim Ermitteln der zweiten Reflektanzdaten und/oder bei der Bestimmung des Reflektanzverhalten des bzw. der zweiten Bereiche nicht berücksichtigt werden.

Es kann eine Optimierung der Oberflächennormalen von Punkten in dem bzw. in den zweiten Bereichen durchgeführt werden.

Es kann eine Korrektur der Farbe von Punkten in dem bzw. den zweiten Bereichen basierend auf mindestens einem Texturbild von mindestens einem Teil des bzw. der zweiten Bereiche durchgeführt werden.

Ferner kann eine Distanzkorrektur der Intensitätswerte des von der ersten Punktlichtquelle abgegebenen Lichtes und des von der Flächenlichtquelle abgegebenen Lichtes so durchgeführt wird, dass virtuell derselbe Abstand der ersten Punktlichtquelle und der Flächenlichtquelle zum zu digitalisierenden Objekt vorliegt.

Es kann eine Farbkalibrierung vor dem Ermitteln der ersten und zweiten Reflektanzdaten und vor dem des Reflektanzverhaltens durchgeführt werden.

Bei der Aufnahme des bzw. der ersten Bereiche und/oder der Aufnahme des bzw. der zweiten Bereiche kann neben dem oder den ersten bzw. zweiten Bereichen ein Hintergrund aufgenommen wird, in dem ein Muster dargestellt ist, um eine Unterscheidung des zu digitalisierenden Objekts vom Hintergrund zu ermöglichen.

Es wird fernere ein Computerprogramm zur Bestimmung des Reflektanzverhaltens einer Oberfläche eines Objekts bereitgestellt, wobei das Computerprogramm Instruktionen umfasst, die, wenn sie auf einem Computer ausgeführt werden, den Computer dazu veranlassen, eine Mehrzahl von Bereichen der Oberfläche des Objektes festzulegen und das Reflektanzverhalten für jeden festgelegten Bereich der Oberfläche des Objekts basierend auf bereitgestellten Bildern zu bestimmen. Damit kann in vorteilhafter Art das Reflektanzverhalten pro festgelegtem Bereich, bei dem es z.B. um einen Oberflächenpunkt oder um einen größeren Bereich handeln kann, bestimmt werden.

Ferner wird ein Datenbearbeitungssystem zur Bestimmung des Reflektanzverhaltens einer Oberfläche eines Objektes, wobei das Datenbearbeitungssystem einen Prozessor und einen Speicher umfasst, bereitgestellt, wobei der Prozessor dazu ausgestaltet ist, basierend auf Instruktionen eines im Speicher gespeicherten Computerprogramms eine Mehrzahl von Bereichen der Oberfläche des Objekts festzulegen und das Reflektanzverhalten für jeden festgelegten Bereich der Oberfläche des Objekts basierend auf bereitgestellten Bildern zu bestimmen.

Somit kann in vorteilhafter Art das Reflektanzverhalten pro festgelegtem Bereich bestimmt werden, wodurch z.B. das Objekt in einer beliebigen Beleuchtungssituation, wenn dies gewünscht ist, wiedergegeben werden kann.

Ferner wird ein nichtflüchtiges computerlesbares Speichermedium mit darauf gespeicherten Instruktionen zur Bestimmung des Reflektanzverhaltens einer Oberfläche eines Objekts bereitgestellt, wobei die Instruktionen, wenn sie auf einem Computer ausgeführt werden, den Computer dazu veranlassen, eine Mehrzahl von Bereichen der Oberfläche des Objektes festzulegen und das Reflektanzverhalten für jeden festgelegten Bereich der Oberfläche des Objekts basierend auf bereitgestellten Bildern zu bestimmen.

Damit kann in vorteilhafter Weise pro festgelegtem Bereich, bei dem es sich z.B. um einen Oberflächenpunkt oder um einen größeren Bereich handeln kann, das Reflektanzverhalten bestimmt werden. Dies ermöglicht es, das Objekt beispielsweise in einer beliebigen Beleuchtungssituation wiederzugeben.

Es wird ferner ein 3D-Digitalisierungssystem mit einer ersten Punktlichtquelle, einer ersten Kamera, einem Halter zum Halten eines Objektes, einer Flächenlichtquelle und einer Steuereinheit bereitgestellt, wobei die erste Punktlichtquelle und die Flächenlichtquelle so ausgebildet und angeordnet sind, dass ein mit Licht der ersten Punktlichtquelle beleuchtbarer Bereich des Objektes kleiner ist als ein mit der Licht der Flächenlichtquelle beleuchtbarer Bereich des Objektes, und wobei die Steuereinheit die erste Punktlichtquelle, die erste Kamera und die Flächenlichtquelle so angesteuert, dass folgende Schritte durchgeführt werden:
A) Beleuchten eines oder mehrerer erster Bereiche des Objektes mit Licht der ersten Punktlichtquelle und Aufnehmen des bzw. der ersten Bereiche mit der ersten Kamera,
B) Beleuchten eines oder mehrerer zweiter Bereiche des Objekts mit Licht der Flächenlichtquelle und Aufnehmen des bzw. der zweiten Bereiche mit der ersten Kamera,
C) Ermitteln von ersten Reflektanzdaten aus der bzw. den Aufnahmen aus Schritt A,
D) Ermitteln von zweiten Reflektanzdaten aus der bzw. den Aufnahmen aus Schritt B,
E) Bestimmen eines Reflektanzverhaltens des bzw. der zweiten Bereiche basierend auf den ersten und zweiten Reflektanzdaten, wobei die ersten Reflektanzdaten über den bzw. die zweiten Bereiche unter Berücksichtigung der zweiten Reflektanzdaten extrapoliert werden.

Durch die Kombination der ersten Punktlichtquelle und der Flächenlichtquelle ist es möglich, sowohl sehr genaue als auch sehr zuverlässige Reflektanzmessungen durchführen zu können. So werden die Stärke der Messung mit der Punktlichtquelle, die sehr genaue Ergebnisse liefert, mit der Stärke der Messung der Flächenlichtquelle, die große Bereiche qualitativ mit ausreichender Genauigkeit erfassen kann, kombiniert, so dass insgesamt das Reflektanzverhalten des bzw. der zweiten Bereiche schnell mit hoher Genauigkeit bestimmt werden kann.

Der erste Bereich ist insbesondere der Bereich auf der Oberfläche des Objektes, von dem eine Reflexion (bevorzugt eine spekulare Reflexion) des von der ersten Punklichtquelle kommenden Lichtes auf die erste Kamera trifft. Daher kann der erste Bereich auch als erster Reflexionsbereich bezeichnet werden. In gleicher Weise ist der zweite Bereich insbesondere der Bereich auf der Oberfläche des Objektes, von dem eine Reflexion (insbesondere eine spekulare Reflexion) des von der Flächenlichtquelle kommenden Lichtes auf die erste Kamera trifft. Daher kann der zweite Bereich auch als zweiter Reflexionsbereich bezeichnet werden.

Werden mehrere erste oder zweite Reflexionsbereiche aufgenommen, bilden die mehreren ersten Bereiche einen ersten vermessenen Abschnitt der Oberfläche des Objektes. Die mehreren zweiten Reflexionsbereiche bilden einen zweiten vermessenen Abschnitt der Oberfläche des Objektes. Der erste vermessene Abschnitt ist insbesondere ein nicht zusammenhängender Teil der Oberfläche des Objektes und ist ferner insbesondere nicht die gesamte Oberfläche des Objektes. Der zweite vermessene Abschnitt ist bevorzugt ein zusammenhängender Teil der Oberfläche des Objektes und kann insbesondere die gesamte Oberfläche des Objektes umfassen.

Bei dem Verfahren kann im Schritt E eine Segmentierung des bzw. der zweiten Bereiche in Abschnitte gleicher Reflektanz durchgeführt werden. In diesen Abschnitten können dann die entsprechenden ersten Reflektanzdaten genutzt werden.

Unter Reflektanz wird hier insbesondere der Reflexionsgrad und daher das Verhältnis der reflektierten Strahlungsleistung zur einfallenden Strahlungsleistung verstanden.

Ferner kann im Schritt D und/oder im Schritt E mindestens ein Teilbereich des Objektes, der in der bzw. den Aufnahmen des bzw. der zweiten Bereiche nicht sichtbar und/oder nicht beleuchtet ist, maskiert und damit in den weiteren Schritten bzw. in den Schritten D und/oder E nicht berücksichtigt werden.

Ferner kann eine Optimierung der Oberflächennormalen in dem zweiten Bereich bzw. in den zweiten Bereichen durchgeführt werden. Dies erhöht die Qualität der Bestimmung des Reflektanzverhaltens.

Des Weiteren kann ein Texturbild von mindestens eines Teils (oder des gesamten) zweiten Bereiches aufgenommen und bei einer Korrektur der Farbe von Punkten in dem bzw. in den zweiten Bereichen berücksichtigt werden.

Ferner kann eine Distanzkorrektur der Intensitätswerte des von der ersten Punktlichtquelle abgegebenen Lichtes und des von der Flächenlichtquelle abgegebenen Lichtes so durchgeführt werden, dass virtuell derselbe Abstand der ersten Punktlichtquelle und der Flächenlichtquelle zum zu digitalisierenden Objekt vorliegt.

Ferner kann die Steuereinheit die erste Punktlichtquelle, die erste Kamera und die Flächenlichtquelle so ansteuern, dass für das Paar erste Punktlichtquelle und erste Kamera und/oder für das Paar Flächenlichtquelle und erste Kamera eine Farbkalibrierung vor den Schritten C bis E durchgeführt wird.

Die Steuereinheit kann die Flächenlichtquelle so ansteuern, dass sie ihr Licht entlang der räumlichen Ausdehnung der Flächenlichtquelle intensitätsmoduliert (z.B. sinusförmig) abgibt.

Die Flächenlichtquelle kann stabförmig, bogenförmig oder eine sonstige Form haben.

Mindestens ein beleuchteter erster Bereich kann zumindest teilweise innerhalb mindestens eines beleuchteten zweiten Bereiches liegen. Insbesondere liegt mindestens ein beleuchteter erster Bereich vollständig innerhalb eines beleuchteten zweiten Bereichs.

Das Licht der ersten Lichtquelle kann weißes Licht sein. In gleicher Weise kann das Licht der Flächenlichtquelle weißes Licht sein. Es ist jedoch auch möglich, dass das Licht der ersten Lichtquelle und/oder das Licht der Flächenlichtquelle eine vorbestimmte Farbe aufweist.

Ferner kann im Schritt A und/oder im Schritt B neben dem oder den ersten bzw. zweiten Bereichen ein Hintergrund aufgenommen werden, in dem ein Muster dargestellt ist, um in den Schritten C bis E eine Unterscheidung des Objekts vom Hintergrund zu ermöglichen. Wenn ein solches Muster dargestellt ist, ist die Unterscheidung in der Regel einfacher als ohne ein solches Muster. Das Muster kann z.B. durch Projektion auf eine Leinwand und/oder durch Erzeugung auf einem oder mehreren Bildschirmen bereitgestellt werden.

Der Halter kann z.B. als drehbarer Halter ausgebildet sein. Insbesondere kann der Halter transparent sein. In diesem Fall ist es leicht möglich, das Objekt von unten durch den Halter zu beleuchten und/oder aufzunehmen.

Das 3D-Digitalisierungssystem kann ein Sensormodul mit der ersten Kamera und der ersten Punktlichtquelle aufweisen. Das Sensormodul kann noch weitere Kameras umfassen. Insbesondere können die erste Kamera und die Punktlichtquelle sowie die eventuell vorgesehenen weiteren Kameras in dem Modul fest mechanisch miteinander verbunden sein.

Das 3D-Digitalisierungssystem kann neben dem Sensormodul mehrere weitere gleich oder ähnlich ausgebildete Sensormodule aufweisen. Bevorzugt sind drei Sensormodule vorgesehen, wobei ein erstes Sensormodul das Objekt von vorne aufnehmen kann, ein zweites Sensormodul das Objekt von unten und ein drittes Sensormodul das Objekt von oben aufnehmen kann. Für jedes weitere Sensormodul kann eine weitere Flächenlichtquelle vorgesehen sein. Somit kann das Objekt in der beschriebenen Art und Weise gleichzeitig an drei unterschiedlichen Stellen beleuchtet und aufgenommen werden, um daraus dann in der beschriebenen Art und Weise das Reflektanzverhalten der entsprechenden aufgenommenen zweiten Bereiche zu ermitteln. Das erfindungsgemäße 3D-Digitalisierungsverfahren kann in gleicher Weise wie das erfindungsgemäße 3D-Digitalisierungssystem weitergebildet werden.

Zusätzlich und alternativ zu der Flächenlichtquelle kann eine diffuse Beleuchtung des zu digitalisierenden Objektes durchgeführt werden. Diese diffuse Beleuchtung kann in Form eines Lichtzeltes, das den gesamten Aufbau umgibt, dadurch realisiert werden, dass das Lichtzelt von außen beleuchtet wird und dieses Beleuchtungslicht diffus in den Innenraum streut, so dass eine diffuse, gleichmäßige Beleuchtung entsteht. Decke und Boden können so ausgeführt sein, dass das Licht diffus reflektiert wird.

Optional kann auf der dem zu digitalisierenden Objekt aus Sicht des jeweiligen Sensormoduls (nachfolgend auch Sensorkopf genannt) gegenüberliegenden Seite eine Projektionsfläche oder eine oder mehrere Bildschirme angebracht sein, auf der bzw. auf denen ein oder mehrere Muster angezeigt werden. Dies erleichtert es, bei der Ermittlung der Reflektanzdaten das zu digitalisierende Objekt vom Hintergrund zu segmentieren.

Die Aufnahme der Geometriedaten kann z.B. mittels eines Streifprojektionsverfahrens erfolgen (dazu kann z.B. ein Projektor des entsprechenden Sensorkopfes verwendet werden). Es ist auch möglich, das Space Carving Verfahren (mittels der bereits erwähnten Projektionsfläche und/oder der erwähnten Bildschirme) durchzuführen. Eine Beschreibung des Space Carving Verfahrens ist z.B. in Kutulakos, K. N., & Seitz, S. M. (2000). "A theory of shape by space carving. International journal of computer vision", 38(3), 199-218, angegeben. Auch kann eine zusätzliche Sensorik (wie z.B. Laserscanning, Time of Flight-Verfahren) oder optische Verfahren (z.B. Photogrammetrie) genutzt werden. Besonders bevorzugt ist das Streifenprojektionsverfahren und oder das Carving Verfahren.

Die beschriebenen Sensorköpfe müssen nicht vorgesehen sein. Die erste Punktlichtquelle und die erste Kamera können z.B. separat angeordnet sein.

Die Beleuchtung der ersten Bereiche mittels der ersten Punktlichtquelle kann insbesondere mit weißem Licht erfolgen. In gleicher Weise kann das Licht der Flächenlichtquelle weißes Licht sein. Die Beleuchtung und Aufnahme der ersten Bereiche sowie die Beleuchtung und Aufnahme des zweiten Bereiches erfolgt bevorzugt zeitlich nacheinander. Beim Drehen des zu digitalisierenden Objektes mittels des Halters kann z.B. die erste Kamera in einen Filmmodus gestellt werden. Im Filmmodus (der in der Regel eine niedrigere Auflösung aufweist, als bei der Aufnahme von Einzelbildern) kann dann die Drehung des Objektes gefilmt werden. Dabei kann die erste Punktlichtquelle oder die Flächenlichtquelle eingeschaltet sein.

Optional kann ein hochaufgelöstes Texturbild mit der ersten Kamera bei diffuser Beleuchtung (z.B. aufgrund des Lichtzeltes) aufgenommen werden. Nach Erreichen der gewünschten Drehposition werden die beschriebenen Schritte zur Aufnahme des ersten Bereiches 16 und des zweiten Bereiches erneut durchgeführt.

Das Verfahren kann in verschiedenen Schritten variiert werden. Die Aufnahmen der Kameras können mit unterschiedlichen Belichtungszeiten zur Erzeugung von High Dynamic Range (HDR) Bildern durchgeführt werden. Die Filmaufnahmen können gleichzeitig mit zwei Kameras mit unterschiedlichen Belichtungszeiten aufgenommen werden, um aus den Videosequenzen HDR-Informationen zu gewinnen.

Die Reihenfolge der Schritte der einzelnen Aufnahmen bei einer Drehstellung des zu digitalisierenden Objektes können geändert werden.

Optional können, wie bereits beschrieben, Geometriedaten mittels der Geometriekameras ermittelt werden. Ferner kann optional vor Durchführung der Schritte eine Farbkalibrierung und/oder eine geometrische Kalibrierung durchgeführt werden. Für die Farbkalibrierung kann ein Farbziel (Color Checker) auf dem Halter positioniert werden. Das Farbziel kann mit Licht der ersten Punktlichtquelle oder mit Licht der Flächenlichtquelle beleuchtet und mit der ersten Kamera aufgenommen werden, um die gewünschte Farbkalibrierung durchzuführen. Das Farbziel kann auch ein zur Farbkalibrierung geeigneter Kalibrierkörper sein.

Für die geometrische Kalibrierung kann vorab oder als Teil des Scanvorgangs das zu digitalisierende Objekt selbst oder ein Kalibrierkörper mit charakteristischen Merkmalen auf dem Halter positioniert werden. Die erste Punktlichtquelle, die als Projektor ausgebildet sein kann, wird dazu genutzt, um ein einzelnes Muster oder mehrere Muster auf das zu digitalisierende Objekt oder den Kalibrierkörper zu projizieren. Das bzw. die projizierten Muster werden aufgenommen. Bevorzugt werden sie von der ersten Kamera der Sensorköpfe aufgenommen. Basierend darauf kann dann die geometrische Kalibrierung durchgeführt werden. Optional kann die Glasplatte (Halter) gedreht werden und weitere Aufnahmen der beschriebenen Art und Weise für die geometrische Kalibrierung durchgeführt werden.

Der zweite Bereich wird bei angeschalteter Flächenlichtquelle aufgenommen. Dabei können natürlich, mehrere Aufnahmen durchgeführt werden. Bevorzugt können auch mehrere Aufnahmen durchgeführt werden, wobei das Beleuchtungsmuster der Flächenlichtquelle geändert wird. Das Muster kann z.B. eine Sinusmodulation der Intensität des abgestrahlten Lichtes entlang der räumlichen Ausdehnungen der Flächenlichtquelle sein.

Zusätzlich können mehrere Drehungen des zu digitalisierenden Objektes durchgeführt werden, bei denen jeweils ein anderes Beleuchtungsmuster der Flächenlichtquelle gewählt wird und eine kontinuierliche Aufnahme mittels der ersten Kamera durchgeführt wird.

Es können mehrere Flächenlichtquellen vorgesehen werden, um dadurch schneller die Messung durchführen zu können.

Die erste Punktlichtquelle kann so angeordnet sein, dass Reflektanzmessungen mit sehr niedrigen Einfallswinkeln durchgeführt werden. Dabei können auch zusätzliche erste Lichtquellen vorgesehen werden.

Die erste Kamera ist bevorzugt so ausgebildet, dass sie das gesamte Objekt aufnimmt. Es können zusätzliche Kameras vorgesehen werden, die nur einen Teil des Objekts (aber mit höherer Auflösung) aufnehmen. Es kann auch sein, dass die erste Kamera nur einen Teil des zu digitalisierenden Objektes aufnimmt. In diesem Fall kann eine zusätzliche erste Kamera dazu genutzt werden, das gesamte zu digitalisierende Objekt aufzunehmen.

Die geometrische Kalibrierung kann vorab gesondert durchgeführt werden (z.B. mit einem separaten Kalibrierobjekt) oder kann als Teil des Scanvorgangs zur Ermittlung des Reflektanzverhaltens am zu digitalisierenden Objekt selbst durchgeführt werden.

Für die Bestimmung des Reflektanzverhaltens kann die Geometrie des zu digitalisierenden Objektes, sofern die Geometrie benötigt wird, durch die beschriebene Messung der geometrischen Eigenschaften oder anderweitig (z.B. anhand von bereitgestellten CAD-Modellen) zur Verfügung gestellt werden.

Danach können Bilder/Filme (z.B. HDR-Bilder/-Filme) aus den aufgenommenen Daten berechnet werden.

Optional kann die Farbkorrektur für das Paar erste Kamera und erste Punktlichtquelle sowie für das Paar erste Kamera und Flächenlichtquelle berechnet werden.

Ferner kann optional eine Distanzkorrektur der Intensitätswerte so durchgeführt werden, dass alle Lichtquellen virtuell denselben Abstand haben.

Dann können alle Bereiche des zu digitalisierenden Objektes, welche nicht sichtbar oder nicht beleuchtet sind, pro aufgenommenem Bild maskiert werden.

Dann kann eine Grobsegmentierung der Oberfläche in unterschiedliche Basismaterialien mit ähnlichen Reflektanzverhalten mittels der Reflektanzbilder der Flächenlichtquelle durchgeführt werden.

Darauf kann eine präzise Berechnung der Reflektanzwerte für jedes Pixel anhand der ersten Reflektanzdaten durchgeführt werden.

Es ist dann möglich, eine photometrische Optimierung der Oberflächennormalen und/oder der Geometrie durchzuführen.

Optional können Daten, die mit höherer Auflösung aufgenommen wurden, auf Bereiche mit gleicher Farbe bzw. gleicher Reflektanz unter Berücksichtigung der Strukturen, der niedriger aufgelösten Messungen, übertragen werden.

Die Ermittlung des Reflektanzverhaltens kann ferner wie folgt durchgeführt werden.

Für die Reflektanzmessung werden aus den aufgenommenen Aufnahmen an einer Position mit unterschiedlicher Belichtungszeit jeweils ein HDR-Bild oder mindestens ein Einzelbild berechnet. Aus den Filmen, die optional während der Drehung aufgenommen wurden, werden, falls diese mit unterschiedlichen Belichtungszeiten aufgenommen wurden, ebenfalls HDR-Bilder/-Filme berechnet. Anschließend kann optional eine Farbkorrektur der HDR-Reflektanzbilder pro Paar aus erster Kamera und erster Punktlichtquelle und Paar aus erster Kamera und Flächenlichtquelle durchgeführt werden. Zusätzlich kann optional eine Distanzkorrektur der HDR-Intensitätswerte durchgeführt werden, so dass alle Lichtquellen (alle Punktlichtquellen und Flächenlichtquellen) virtuell denselben Abstand zum zu digitalisierenden Objekt haben.

Dann wird eine Sichtbarkeits-Gewichtungsanalyse durchgeführt. Pro HDR-Reflektanzbild wird eine Maskierung der Bereiche des zu digitalisierenden Objektes im aktuellen Reflektanzbild durchgeführt, die nicht sichtbar (z.B. durch Verdeckung) oder nicht beleuchtet (z.B. durch Verschattungen) sind. Diese Methode kann beispielsweise mittels Ray Tracing zur ersten Kamera bzw. zur Punktlichtquelle oder zur Flächenlichtquelle durchgeführt werden. Es kann eine Gewichtung durchgeführt werden, bei der sichtbare und beleuchtete Abschnitte zusätzlich noch ein Gewicht (Wert der Zuverlässigkeit) beispielsweise nach folgenden Kriterien zugewiesen wird. Wie steil wird der Abschnitt gesehen, wobei steil zu einem hohen Gewicht und flach zu einem niedrigen Gewicht führt. Wie steil wird die Oberfläche beleuchtet, wobei steil zu einem hohen Gewicht und flach zu einem niedrigen Gewicht führt. Wie weit sind Tiefensprünge entfernt, wobei weit zu einem hohen Gewicht und nah zu einem niedrigen Gewicht führt.

Optional kann eine schattenfreie Textur berechnet werden. Aus dem gewichteten Mittel aller Reflektanzbilder wird eine schattenfreie Textur berechnet, wobei die geometrische Abschattung herausgerechnet wird. Dabei kann z.B. Teilen durch Skalarprodukte aus Normale und Lichtvektor eingesetzt werden.

Dann kann eine Grobbestimmung des Reflektanzverhaltens pro Oberflächenpunkt aus der Aufnahme basierend auf der Beleuchtung mittels der Flächenlichtquelle erfolgen. Durch die dichte Abtastung der Oberfläche mit Messwerten basierend auf der Beleuchtung mit Licht der Flächenlichtquelle können pro Oberflächenpunkt grobe Aussagen über das Reflektanzverhalten getroffen werden (z.B. Grundfarbe/Albedo und ob die Oberfläche glatt oder rau ist).

Dann kann die Oberfläche in ihre Basismaterialien segmentiert werden. Dazu werden Bereiche der Oberfläche, die ähnliches Reflektanzverhalten aufweisen, zu logischen Bereichen zusammengefasst. Dazu kann eine Segmentierung auf das Reflektanzverhalten, das mittels der durchgeführten Grobbestimmung des Reflektanzverhaltens pro Oberflächenpunkt ermittelt wurde, durchgeführt werden. Als Ausgabe kann jeder Oberflächenpunkt einer einzelnen Segment-Identifikation zugeordnet werden.

Dann kann eine Aggregation aller Reflektanzdaten erfolgen. Die Reflektanzdaten (z.B. Vektor zur ersten Kamera und zum Licht, Normale und reflektierte Helligkeit an jedem Oberflächenpunkt), d.h. Einfalls- und Ausfallswinkel des Lichtes werden mit Hilfe der Kalibrierung der ersten Kamera und der ersten Punktlichtquelle sowie der Flächenlichtquelle aus den Reflektanzbildern berechnet und anschließend pro Segment zusammengeführt. Dies erfolgt beispielsweise mittels einer 2D-Reparametrisierung der jeweiligen Einfalls- und Ausfallsrichtung. Auf diese Weise können unabhängig von der jeweiligen Oberflächenposition und/oder Oberflächenausrichtung alle Reflektanzdaten pro Segment in einer Reflektanztabelle aggregiert werden.

Dann kann eine grobe BRDF-Parameterbestimmung der Basismaterialien erfolgen (BRDF = Bidirectional Reflectance Distribution Function = bidirektionale Reflexionsverteilungsfunktion). Pro BRDF-Tabelle werden die Parameter eines parametrischen BRDF-Modells (z.B. der Disney Principled BRDF, Burley, Brent "Physically-Based Shading at Disney", 2012) mittels nichtlinearer Optimierung bestimmt.

Optional kann eine feine BRDF-Parameterbestimmung der Basismaterialien durchgeführt werden. Häufig führen kleine Fehler in der exakten Bestimmung der Normalen der Oberfläche dazu, dass die Oberflächenparameter bei der groben BRDF-Parameterbestimmung als zu matt bestimmt werden. Daher können pro BRDF-Tabelle eine Reihe von einzelnen Reflektanzdaten ausgewählt werden, deren Winkelkombination als für das Reflektanzverhalten besonders aussagekräftig eingestuft sind (d.h. mit hoher Wahrscheinlichkeit spiegelnde Messwerte aufweisen). Die BRDF-Parameter werden dann nochmals optimiert, wobei nun die Normalen der ausgewählten Reflektanzdaten bis zur Konvergenz mit optimiert werden. Die Optimierung erfolgt regularisiert, d.h. hohe Abweichungen der optimierten Normalen von den ursprünglichen Werten werden dabei bestraft.

Dann kann eine feine BRDF-Parametrisierung der Oberfläche durchgeführt werden. Jeder Objektpunkt erhält die BRDF-Parameter der Basismaterialien (aus der Grundfarbe/Albedo) gemäß seiner Segmentierung bzw. der Segmentierung in der näheren Nachbarschaft (weiche Übergänge zwischen Basismaterialien sind möglich). Weitere Abstufungen der BRDF-Parameter sind mittels dem bei der Grobbestimmung des Reflektanzverhaltens pro Oberflächenpunkt grob bestimmten Reflektanzverhalten möglich. Die Grundfarben werden anschließend unabhängig pro Oberflächenpunkt mittels nichtlinearer Optimierung bestimmt, indem die Abweichung gerenderter Bilder zu allen diesen Objektpunkt beobachtenden Reflektanzbildern minimiert wird.

Optional kann eine photometrische Optimierung der Oberflächennormalen durchgeführt werden. Dazu kann die Normale jedes Oberflächenpunktes unabhängig mittels nichtlinearer Optimierung bestimmt werden, indem die Abweichung gerenderter Bilder zu allen diesen Objektpunkt beobachtenden Reflektanzbildern minimiert wird.

Ferner kann optional ein Post Processing der Grundfarben durchgeführt werden. Die Grundfarben der feinen BRDF-Parameterbestimmung der Basismaterialien können Artefakte (z.B. durch fehlerhafte Geometrie, unterschiedliche Sichtbarkeiten/Gewichtungen, lokale Minima während der Optimierung, etc.) sowie eine gewisse Unschärfe aufweisen, da die Grundfarben aus allen verfügbaren Reflektanzbildern pro Oberflächenpunkt bestimmt werden. Die entstandenen Artefakte können mit Hilfe der optional aufgenommenen Texturbilder korrigiert werden. Dazu werden die Grundfarben optimiert, bis sie ähnliche Kanten wie die Texturbilder in den relevanten Bereichen aufweisen. Dadurch werden feine, die Helligkeit verändernde Oberflächendetails in die Grundfarben übertragen, während die Grundintensität der Basisfarben nicht wesentlich verändert wird. So entsteht eine deutlich schärfere Textur mit weniger Artefakten.

Optional kann ein Post Processing der Oberflächennormalen und/oder der Geometrie durchgeführt werden. Die photometrisch optimierten Normalen aus dem Post Processing der Grundfarben wurden jeweils unabhängig pro Oberflächenpunkt generiert und können dementsprechend Artefakte (z.B. Artefakte durch Rauschen, unterschiedliche Sichtbarkeiten/Gewichtungen, lokale Minima während der Optimierung, unpräzise BRDF-Parameter, etc.) aufweisen. Diese Fehler können z.B. dadurch korrigiert werden, dass eine Versatzkarte (Displacement Map) zum Basisgitter (Basismesh) berechnet wird, welche die photometrisch optimierten Normalen approximiert. Die Berechnung der Displacement Map erfolgt regularisiert, d.h. benachbarte Displacements haben ähnlich Werte und sind möglichst nahe bei Null. Die Geometrie des zu digitalisierenden Objektes 8 kann dann verfeinert werden, indem sie über die Displacement Map verschoben wird. Die korrigierten Normalen werden dann z.B. mittels PCA (= Principal Component Analysis = Hauptkomponentenanalyse) aus der deformierten Geometrie (Basisgeometrie + Displacement Map) bestimmt.

Die final bestimmten BRDF-Parameter können in Form von mehreren Texturen (z.B. anhand des Metalness/Roughness-Workflow) abgespeichert werden. Optional kann die optimierte Geometrie in Form eines Meshes bzw. einer Normalmap abgespeichert werden.

Die Kombination der ersten Punktlichtquelle und der Flächenlichtquelle erlauben es, sowohl sehr genaue als auch sehr zuverlässige Reflektanzmessungen durchführen zu können. Die Nachteile der beiden Methoden (kleine Highlights und damit nur wenige Messdaten für die Punktlichtquelle sowie ungenaue Kalibrierung für die Flächenlichtquelle) werden aufgehoben. Durch die Kombination beider Lichtquellentypen entfallen fehlerbehaftete Annahmen über die Reflektanzverteilung über die Oberfläche für ungemessene Bereiche, bei denen in der Vergangenheit z.B. häufig angenommen wurde, dass ähnlichfarbige Bereiche eines zu digitalisierenden Objekts auch ansonsten ähnliche Reflektanzcharakteristiken aufweisen. Beispielsweise bei einem zu digitalisierenden Objekt mit teilweise glänzenden und matten roten Bereichen konnte in der Vergangenheit - unter ausschließlicher Verwendung von Punktlichtquellen - das Reflektanzverhalten nicht korrekt pro Oberflächenpunkt zugewiesen werden (insbesondere wenn spiegelnde und matte Bereiche angrenzen). Die Aufteilung der Oberfläche in ihre Basismaterialien wird durch den Einsatz der Flächenlichtquelle deutlich verbessert, da größere Highlights auf dem Objekt entstehen und man mehr Messwerte erhält, die für eine sinnvolle Segmentierung (z.B. in einen glänzenden und einen matten roten Bereich) genutzt werden können. Bei der anschließenden genauen Berechnung der Reflektanzwerte pro Basismaterial können jedoch (anders als im Fall eines Aufbaus mit ausschließlich einer Flächenlichtquelle) die genauen Messwerte der Punktlichtquellenmessung verwendet werden, wodurch eine hohe visuelle Qualität erreicht wird.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: eine schematische Ansicht eines Ausführungsbeispiels des erfindungsgemäßen 3D-Digitalisierungssystems, und
- Fig. 2: eine schematische Ansicht des ersten Sensorkopfs.

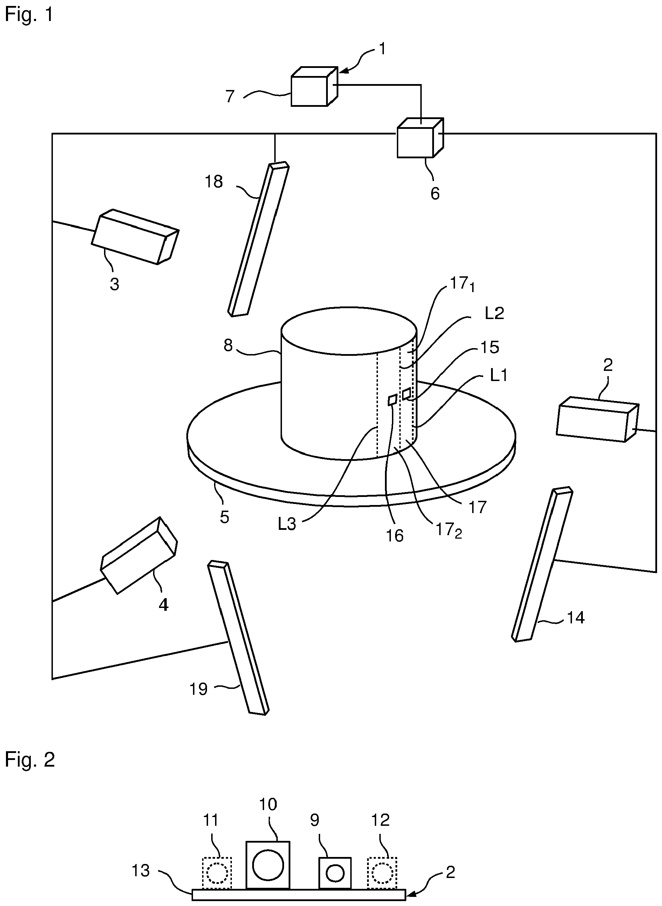

Bei dem in Fig. 1 gezeigten Ausführungsbeispiel eines 3D-Digitalisierungssystems 1 umfasst dieses einen ersten, zweiten und dritten Sensorkopf 2, 3, 4, einen als drehbare Glasplatte ausgebildeten Halter 5, eine Positioniereinrichtung 6 sowie eine Steuereinheit 7. Auf dem Halter 5 ist ein zu digitalisierendes Objekt 8 positioniert.

Die Sensorköpfe 2, 3 und 4 sind in dem hier beschriebenen Ausführungsbeispiel gleich ausgebildet (sie können alternativ unterschiedlich sein). Wie in der schematischen Ansicht des ersten Sensorkopfes 2 in Fig. 2 ersichtlich ist, umfasst der erste Sensorkopf 2 eine erste Punktlichtquelle 9 (die z.B. als Projektor oder Digitalprojektor oder als LED ausgebildet sein kann) und eine erste Kamera 10. Ferner kann der erste Sensorkopf 2 optional zwei Geometriekameras 11, 12 umfassen, die in Fig. 2 gestrichelt dargestellt sind. Der erste Sensorkopf 2 kann eine Platte 13 aufweisen, auf der die erste Punktlichtquelle 9, die erste Kamera 10 sowie, sofern vorhanden, die Geometriekameras 11 und 12 befestigt sind.

Wie aus Fig. 1 ersichtlich ist, umfasst das 3D-Digitalisierungssystem 1 ferner eine Flächenlichtquelle 14.

Das 3D-Digitalisierungssystem 1 ist so ausgebildet, dass mit der ersten Punktlichtquelle 9 ein erster Bereich 15 des zu digitalisierenden Objektes 8 beleuchtet und mit der ersten Kamera 10 aufgenommen werden kann. Der erste Bereich 15 ist somit insbesondere der Bereich auf der Oberfläche des zu digitalisierenden Objektes 8, von dem eine Reflexion (bevorzugt direkte Reflexion) des von der ersten Punktlichtquelle 9 kommenden Lichtes auf die erste Kamera 10 trifft. Der erste Bereich 15 kann daher auch ersten Reflexionsbereich 15 bezeichnet werden. Nach einer solchen Aufnahme kann der Halter 5 beispielsweise etwas gedreht werden, so dass dann mit der ersten Punktlichtquelle 9 des ersten Sensorkopfes 2 ein weiterer erster Bereich 16 beleuchtet und mit der ersten Kamera 10 aufgenommen werden kann. Die mehreren ersten Bereiche 15 bilden zusammen einen ersten vermessenen Abschnitt der Oberfläche des zu digitalisierenden Objektes 8. Der erste vermessene Abschnitt ist insbesondere ein nicht zusammenhängender Teil der Oberfläche des zu digitalisierenden Objektes 8 und ist ferner insbesondere nicht die gesamte Oberfläche des zu digitalisierenden Objektes 8.

In der Drehstellung des Halters 5 zur Beleuchtung und Aufnahme des ersten Bereiches 15 kann ein zweiter Bereich 17 mit Licht der Flächenlichtquelle 14 beleuchtet und mit der ersten Kamera 10 des ersten Sensorkopfes 2 aufgenommen werden. Der zweite Bereich 17 ist größer als jeder der ersten Bereiche 15, 16. Dies ist in der Darstellung in Fig. 1 durch die Punktlinien L1 und L3 angedeutet, die nur zur Erläuterung dienen und nicht tatsächlich sichtbar sind. Der Bereich des zu digitalisierenden Objektes 8 zwischen diesen Punktlinien L1 und L3 ist hier der zweite Bereich 17. Der zweite Bereich 17 ist somit insbesondere der Bereich auf der Oberfläche des zu digitalisierenden Objektes 8, von dem eine Reflexion (insbesondere eine direkte Reflexion) des von der Flächenlichtquelle 14 kommenden Lichtes auf die erste Kamera 10 trifft. Der zweite Bereich kann somit auch als zweiter Reflexionsbereich 17 bezeichnet werden.

Die Beleuchtung der ersten Bereiche 15, 16 mit Licht der Punktlichtquelle 9 zusammen mit der Durchführung der Aufnahmen der beleuchteten ersten Bereiche 15, 16 sowie die Beleuchtung des zweiten Bereiches 17 mit Licht der Flächenlichtquelle 14 und der Aufnahme des beleuchteten zweiten Bereiches 17 dient dazu, das Reflektanzverhalten des zu digitalisierenden Objektes 8 und insbesondere des zweiten Bereiches 17 zu erfassen. Unter dem Reflektanzverhalten (das auch als Reflexionsverhalten bezeichnet werden kann) wird hier insbesondere verstanden, wie das Licht von der Oberfläche des zu digitalisierenden Objektes 8 reflektiert und/oder gestreut wird.

Um nun das Reflektanzverhalten des zweiten Bereiches 17 einerseits möglichst genau und andererseits möglichst schnell zu erfassen, wird bei dem erfindungsgemäßen 3D-Digitalisierungssystem 1 die Beleuchtung und Aufnahme der ersten Bereiche 15, 16 sowie die Beleuchtung und Aufnahme des zweiten Bereiches 17 in der beschriebenen Art und Weise kombiniert.

Für das beschriebene Ausführungsbeispiel wird angenommen, dass das Reflektanzverhalten des zweiten Bereiches 17 des zu digitalisierenden Objektes 8 nicht konstant ist. So weist der zweite Bereich 17 einen ersten Teilbereich 17₁ auf, der zwischen den Punktlinien L1 und L2 liegt und beispielsweise ein spiegelndes schwarzes Material umfasst. Ferner umfasst der zweite Bereich 17 einen zweiten Teilbereich 17₂, der sich von der Punktlinie L2 bis zur Punktlinie L3 erstreckt, und ein nicht spiegelndes schwarzes Material aufweist. Die Punktlinie L2 ist nur zur Erläuterung eingezeichnet und tatsächlich nicht vorhanden und nicht sichtbar.

Die Messung mit der ersten Punktlichtquelle 9 weist den Vorteil auf, dass die erste Punktlichtquelle 9 sehr gut und genau kalibriert werden kann. Damit sind ihre Position und die Abstrahlrichtung des von der ersten Punktlichtquelle 9 abgegebenen Lichtes genau bekannt, so dass aus den Aufnahmen der beleuchteten ersten Bereiche 15, 16 erste Reflektanzdaten ermittelt werden können, die die Reflektanzeigenschaften der ersten Bereiche 15 und 16 sehr realitätsnah charakterisieren. Würde man nun, wie bisher davon ausgehen, dass Bereiche mit ähnlicher Grundfarbe (hier schwarz) das Licht auf ähnliche Art reflektieren, könnte aus den Messungen der ersten Bereiche 15 und 16 nicht auf das Reflektanzverhalten des zweiten Bereiches rückgeschlossen werden, da die Grundfarbe in beiden Teilbereichen gleich ist, das Reflektanzverhalten sich aber deutlich unterscheidet.

Jedoch kann hier in vorteilhafter Weise die Messung des zweiten Bereiches 17 durch Beleuchten mit Licht der Flächenlichtquelle 14 und Aufnahme des beleuchteten zweiten Bereiches 17 genutzt werden. Durch den größer beleuchteten zweiten Bereich 17 erhält man im Vergleich zu den beleuchten ersten Bereichen 15, 16 deutlich mehr relevante Messdaten. Diese Messdaten weisen zwar den Nachteil auf, dass sie schlechter zu interpretieren sind, da die Flächenlichtquelle 14 im Vergleich zur ersten Punktlichtquelle 9 schlechter kalibriert und/oder kontrolliert werden kann, so dass ihre Position und Abstrahlrichtungen der einzelnen Lichtstrahlen des Lichtes der Flächenlichtquelle 14 nicht genau bekannt sind. Jedoch können aus der Aufnahme des beleuchteten zweiten Bereiches 17 zweite Reflektanzdaten ermittelt werden, die es beispielsweise erlauben, das spiegelnde schwarze Material im ersten Teilbereich 17₁ korrekt zu erfassen und abzugrenzen von den nicht spiegelnden schwarzen Materialien des zweiten Teilbereiches 17₂.

Damit kann das Reflektanzverhalten des zweiten Bereichs 17 basierend auf den ersten und zweiten Reflektanzdaten in der Art und Weise bestimmt werden, dass die ersten Reflektanzdaten über den zweiten Bereich 17 unter Berücksichtigung der zweiten Reflektanzdaten extrapoliert werden. In dem beschriebenen Ausführungsbeispiel kann man somit das Reflektanzverhalten des ersten Bereiches 15 über den ersten Teilbereich 17₁ und das Reflektanzverhalten des weiteren ersten Bereiches 16 über den zweiten Teilbereich 17₂ extrapolieren. Somit kann in schneller und genauer Art und Weise das Reflektanzverhalten des zweiten Bereiches 17 bestimmt werden.

Durch Drehen des zu digitalisierenden Objektes 8 mittels des Halters 5 kann in dieser Art und Weise das Reflektanzverhalten der gesamten Oberfläche des zu digitalisierenden Objektes 8 ermittelt werden. Es können mehrere zweite Bereiche 17 aufgenommen und in der beschriebenen Art und Weise das Reflektanzverhalten ermittelt werden. Die mehreren zweiten Bereiche 17 bilden zusammen einen zweiten vermessenen Abschnitt der Oberfläche des zu digitalisierenden Objektes 8. Der zweite vermessene Abschnitt kann ein Teil oder die gesamte Oberfläche des zu digitalisierenden Objektes 8 umfassen. Dazu können insbesondere der zweite und dritte Sensorkopf 3, 4 zusammen mit einer zweiten und dritten Flächenlichtquelle 18 und 19 in der in Verbindung mit dem ersten Sensorkopf 2 und der Flächenlichtquelle 14 beschriebenen Art und Weise verwendet werden, so dass das Reflektanzverhalten der gesamten Oberfläche des zu digitalisierenden Objektes 8 schnell und genau erfasst wird. Wie schematisch in Fig. 1 angedeutet ist, kann mit dem ersten Sensorkopf 2 das zu digitalisierende Objekt 8 von vorne beleuchtet und aufgenommen werden. Der zweite Sensorkopf 3 dient zur Beleuchtung der Aufnahme von oben und der dritte Sensorkopf 4 zur Beleuchtung der Aufnahme von unten (gegebenenfalls durch den Glastisch 5 hindurch).

Wenn die Sensorköpfe 2-4 die optionalen Geometriekameras 11 und 12 aufweisen, kann gleichzeitig mit der Detektion des Reflektanzverhaltens der Oberfläche auch die Geometrie des zu digitalisierenden Objektes 8 (also seine geometrischen Abmessungen) sowie die Farbe detektiert werden.

Die Flächenlichtquellen 14, 18 und 19 sind in Fig. 1 stabförmig dargestellt. Sie können jedoch auch bogenförmig sein oder jede andere geometrische Form aufweisen. Die Flächenlichtquellen 14, 18 und 19 weisen in der Regel scharfe Kanten auf und ihr Licht kann einen hohen Kontrast zur Umgebung erzeugen. Ferner können die Flächenlichtquellen 14, 18, 19 beispielsweise moduliert werden (z.B. mit einem sinusförmigen Muster), so dass eine örtlich modulierte Intensität des Lichtes der entsprechenden Flächenlichtquelle 14, 18, 19 vorliegt.

Die in Fig. 1 gezeigte Darstellung ist als rein schematische Darstellung zu verstehen. Auch müssen nicht die beschriebenen Sensorköpfe 2, 3 und 4 vorgesehen sein. Die erste Punktlichtquelle 9 und die erste Kamera 10 können z.B. separat angeordnet sein.

## Patentansprüche

1. Computerimplementiertes Verfahren zur Bestimmung des Reflektanzverhaltens einer Oberfläche eines Objektes (8), **gekennzeichnet durch**
- Bereitstellen von Bildern des Objektes (8),
- Festlegen einer Mehrzahl von Bereichen der Oberfläche des Objektes (8) und
- Bestimmen des Reflektanzverhaltens für jeden festgelegten Bereich der Oberfläche des Objektes (8) basierend auf den bereitgestellten Bildern.

2. Computerimplementiertes Verfahren nach Anspruch 1, **dadurch gekennzeichnet, dass** zur Bereitstellung der Bilder mindestens eine der folgenden Beleuchtungen verwendet wird: Punktlichtquelle (9) und Flächenlichtquelle (14, 18, 19).

3. Computerimplementiertes Verfahren nach Anspruch 1 oder 2, **dadurch gekennzeichnet, dass**
I) zum Bereitstellen der Bilder des Objektes (8)
- ein oder mehrere erste Bereiche (15, 16) der Oberfläche des Objektes (8) mit Licht einer ersten Punktlichtquelle (9) beleuchtet und aufgenommen wird bzw. werden, sowie
- ein oder mehrere zweite Bereiche (17) der Oberfläche des Objektes (8) mit Licht einer Flächenlichtquelle (14, 18, 19) beleuchtet und aufgenommen wird bzw. werden, und dass
II) zum Bestimmen des Reflektanzverhaltens
- erste Reflektanzdaten aus der bzw. den Aufnahmen des bzw. der ersten Bereiche (15, 16) ermittelt werden,
- zweite Reflektanzdaten aus der bzw. den Aufnahmen des bzw. der zweiten Bereiche (17) ermittelt werden und
- ein Reflektanzverhalten des bzw. der zweiten Bereiche (17) basierend auf den ersten und zweiten Reflektanzdaten bestimmt wird, wobei die ersten Reflektanzdaten über den bzw. die zweiten Bereiche (17) unter Berücksichtigung der zweiten Reflektanzdaten extrapoliert werden.

4. Computerimplementiertes Verfahren nach Anspruch 3, **dadurch gekennzeichnet, dass** beim Festlegen der Mehrzahl von Bereichen der Oberfläche des Objektes (8) jeder beleuchtete erste Bereich (15, 16) kleiner ist als jeder beleuchtete zweite Bereich (17) und/oder mindestens ein beleuchteter erster Bereich (15, 16) mindestens teilweise innerhalb mindestens eines beleuchteten zweiten Bereiches (17) liegt.

5. Computerimplementiertes Verfahren nach Anspruch 3 oder 4, **dadurch gekennzeichnet, dass** beim Bestimmen des Reflektanzverhalten des bzw. der zweiten Bereiche (17) eine Segmentierung des bzw. der zweiten Bereiche (17) in Abschnitte (17₁, 17₂) gleichen Reflektanzverhaltens durchgeführt wird.

6. Computerimplementiertes Verfahren nach einem der Ansprüche 3 bis 5, **dadurch gekennzeichnet, dass**
beim Ermitteln der zweiten Reflektanzdaten und/oder beim Bestimmen des Reflektanzverhalten des bzw. der zweiten Bereiche (17) basierend auf den ersten und zweiten Reflektanzdaten mindestens ein Teilbereich des zu digitalisierenden Objektes (8), der in der bzw. den Aufnahmen des bzw. der zweiten Bereiche (17) nicht sichtbar und/oder nicht beleuchtet ist, maskiert und damit beim Ermitteln der zweiten Reflektanzdaten und/oder bei der Bestimmung des Reflektanzverhalten des bzw. der zweiten Bereiche (17) basierend auf den ersten und zweiten Reflektanzdaten nicht berücksichtigt werden

7. Computerimplementiertes Verfahren nach einem der Ansprüche 3 bis 6, **dadurch gekennzeichnet, dass**
beim Bestimmen des Reflektanzverhaltens eine Optimierung der Oberflächennormalen von Punkten in dem bzw. in den zweiten Bereichen (17) durchgeführt wird.

8. Computerimplementiertes Verfahren nach einem der Ansprüche 3 bis 7, **dadurch gekennzeichnet, dass**
beim Bestimmen des Reflektanzverhaltens basierend auf mindestens einem Texturbild von mindestens einem Teil des bzw. der zweiten Bereiche (17) eine Korrektur der Farbe von Punkten in dem bzw. den zweiten Bereichen (17) durchgeführt wird.

9. Computerimplementiertes Verfahren nach einem der Ansprüche 3 bis 8, **dadurch gekennzeichnet, dass**
beim Bestimmen des Reflektanzverhaltens eine Distanzkorrektur der Intensitätswerte des von der ersten Punktlichtquelle (9) abgegebenen Lichtes und des von der Flächenlichtquelle (14, 18, 19) abgegebenen Lichtes so durchgeführt wird, dass virtuell derselbe Abstand der ersten Punktlichtquelle (9) und der Flächenlichtquelle (14, 18, 19) zum zu digitalisierenden Objekt (8) vorliegt.

10. Computerimplementiertes Verfahren nach einem der Ansprüche 3 bis 9, **dadurch gekennzeichnet, dass**
vor dem Bestimmen des Reflektanzverhaltens gemäß Merkmalen II) von Anspruch 3 eine Farbkalibrierung durchgeführt wird.

11. Computerimplementiertes Verfahren nach einem der obigen Ansprüche, **dadurch gekennzeichnet, dass**
beim Festlegen der Mehrzahl von Bereichen der Oberfläche des Objektes (8) und/oder beim Bestimmen des Reflektanzverhaltens Geometriedaten des Objektes (8) berücksichtigt werden, die durch mindestens eine der nachfolgenden Schrittfolgen ermittelt werden:
- es wird neben dem oder den ersten bzw. zweiten Bereichen (15, 16; 17) ein Hintergrund aufgenommen, in dem ein Muster dargestellt ist, um eine Unterscheidung des zu digitalisierenden Objekts (8) vom Hintergrund zu ermöglichen,
- es wird mindestens ein Muster, bevorzugt ein Streifenmuster, auf das Objekt (8) projiziert und es wird das Objekt (8) mit dem darauf projizierten Streifenmuster aufgenommen,
- es wird das Objekt (8) mittels Laserscanning und/oder einem Time-of-flight-Sensor vermessen, um Geometriedaten des Objekts (8) zu erhalten,
- es wird das Objekt (8) mit dem Zweck aufgenommen, diese Aufnahme für Photogrammetrieberechnungen zu verwenden, und
- es werden die Geometriedaten aus einem CAD-Daten des Objektes (8) abgeleitet.

12. Computerimplementiertes Verfahren nach einem der obigen Ansprüche, **dadurch gekennzeichnet, dass**
das Objekt (8) ein Brillenglas, eine Brillenfassung oder eine Brille ist.

13. Computerprogramm zur Bestimmung des Reflektanzverhaltens einer Oberfläche eines Objektes (8),
**dadurch gekennzeichnet, dass**
das Computerprogramm Instruktionen umfasst, die, wenn sie auf einem Computer ausgeführt werden, den Computer dazu veranlassen, eine Mehrzahl von Bereichen der Oberfläche des (8) Objektes (8) festzulegen und
das Reflektanzverhaltens für jeden festgelegten Bereich der Oberfläche des Objektes (8) basierend auf bereitgestellten Bildern zu bestimmen.

14. Datenverarbeitungssystem zur Bestimmung des Reflektanzverhaltens einer Oberfläche eines Objektes (8), wobei das Datenverarbeitungssystem einen Prozessor und einen Speicher umfasst, **dadurch gekennzeichnet, dass**
der Prozessor dazu ausgestaltet ist, basieren auf Instruktionen eines im Speicher gespeicherten Computerprogramms eine Mehrzahl von Bereichen der Oberfläche des Objektes (8) festzulegen und das Reflektanzverhaltens für jeden festgelegten Bereich der Oberfläche des Objektes (8) basierend auf bereitgestellten Bildern zu bestimmen.

15. Nichtflüchtiges computerlesbares Speichermedium mit darauf gespeicherten Instruktionen zur Bestimmung des Reflektanzverhaltens einer Oberfläche eines Objektes (8),
**dadurch gekennzeichnet, dass**
die Instruktionen, wenn sie auf einem Computer ausgeführt werden, den Computer dazu veranlassen, eine Mehrzahl von Bereichen der Oberfläche des Objektes (8) festzulegen und
das Reflektanzverhaltens für jeden festgelegten Bereich der Oberfläche des Objektes (8) basierend auf bereitgestellten Bildern zu bestimmen.

16. Vorrichtung zur Bestimmung des Reflektanzverhaltens einer Oberfläche eines Objektes (8),
mit einer Punktlichtquelle (9), einer Kamera (10), einem Halter (5) zum Halten eines Objektes (8), einer Flächenlichtquelle (14, 18, 19) und einer Steuereinheit (7),
wobei die Punktlichtquelle (9) und die Flächenlichtquelle (14, 18, 19) so ausgebildet und angeordnet sind, dass ein mit Licht der Punktlichtquelle (9) beleuchtbarer Bereich des Objektes (8) kleiner ist als ein mit der Licht der Flächenlichtquelle (14, 18, 19) beleuchtbarer Bereich des Objektes (8), und wobei die Steuereinheit (7) die Punktlichtquelle (9), die Kamera (10) und die Flächenlichtquelle (14, 18, 19) so angesteuert, dass folgende Schritte durchgeführt werden:
- Bereitstellen von Bildern des Objektes (8),
- Festlegen einer Mehrzahl von Bereichen der Oberfläche des Objektes (8) und
- Bestimmen des Reflektanzverhaltens für jeden festgelegten Bereich der Oberfläche des Objektes (8) basierend auf den bereitgestellten Bildern.
